# EUROPÄISCHE PATENTSCHRIFT

(11) **EP 2 861 467 B1**
(45) Veröffentlichungstag und Bekanntmachung des Hinweises auf die Patenterteilung: **03.05.2017**
(21) Anmeldenummer: 13727599.6
(22) Anmeldetag: 06.06.2013
(51) Int. Cl.: B60S 1/38, B60S 1/40

(54) **WISCHBLATTADAPTERSYSTEM**
WIPER BLADE ADAPTER SYSTEM
SYSTÈME ADAPTATEUR DE BALAI D'ESSUIE-GLACE

(30) Priorität: 13.06.2012 DE 102012209867; 14.06.2012 DE 102012209956
(43) Veröffentlichungstag der Anmeldung: 22.04.2015
(73) Patentinhaber: Robert Bosch GmbH, 70442 Stuttgart (DE)
(72) Erfinder: DEPONDT, Helmut, B-3010 Kessel-Lo (BE); HERINCKX, Dirk, B-3350 Dries-Linter (BE); NIJS, Ingo, B-3690 Zutendaal (BE)
(86) Internationale Anmeldenummer: PCT/EP2013/061666
(87) Internationale Veröffentlichungsnummer: WO 2013/186111

(56) Entgegenhaltungen:
- DE-A1-102010 041 152
- US-A1- 2011 247 166

## Beschreibung

### Stand der Technik

Die Erfindung geht aus von einem Wischblattadaptersystem nach dem Oberbegriff des Patentanspruchs 1. Die US 2011/0247166 A1 offenbart ein solches System. Es ist bereits ein Wischblattadaptersystem mit einer Wischblattadaptereinheit und mit zumindest zwei unterschiedlich geformten Verbindungselementen bekannt, wobei die Wischblattadaptereinheit in einem montierten Zustand mit einem der zumindest zwei Verbindungselemente gekoppelt ist.

### Offenbarung der Erfindung

Die Erfindung geht aus von einem Wischblattadaptersystem mit einer Wischblattadaptereinheit und mit zumindest zwei unterschiedlich geformten Verbindungselementen, wobei die Wischblattadaptereinheit in einem montierten Zustand mit einem der zumindest zwei Verbindungselemente gekoppelt ist.

Es wird vorgeschlagen, dass die Wischblattadaptereinheit eine Getriebeeinheit umfasst, die dazu vorgesehen ist, bei einem Demontagevorgang eine Kopplung zwischen dem zumindest einen Verbindungselement und der Wischblattadaptereinheit zu lösen, wodurch eine Demontage auf besonders einfache und schnelle Weise erfolgen kann. Unter einer "Wischblattadaptereinheit" soll in diesem Zusammenhang insbesondere eine Einheit verstanden werden, die einen Kontaktbereich zu einem Verbindungselement aufweist und mit dem Verbindungselement unverlierbar verbindbar ist und ferner dazu vorgesehen ist, einen Kopplungsbereich eines Wischblattbauteils eines Wischblatts, wie insbesondere einer Federschiene, einer Wischleiste, eines Windabweiserelements und/oder einer Wischlippe, für eine Kopplung und/oder Kontaktierung mit dem Verbindungselement bereitzustellen. Unter "unterschiedlich geformt" soll in diesem Zusammenhang insbesondere verstanden werden, dass eine Ausformung eines Bauteils von einer Ausformung eines weiteren Bauteils abweicht. Unter einem "Verbindungselement" soll in diesem Zusammenhang insbesondere ein Element verstanden werden, das dazu vorgesehen ist, die Wischblattadaptereinheit mit einem Wischarm und/oder einem Wischarmadapter zu verbinden. Insbesondere ist das Verbindungselement dazu vorgesehen, einen Kopplungsbereich zur Kopplung eines Wischarms und/oder eines Wischarmadapters bereitzustellen. Insbesondere ist das Verbindungselement dazu vorgesehen, mit unterschiedlichen Bauarten von Wischarmadaptern gekoppelt zu werden. Unter "unterschiedlichen Bauarten von Wischarmadaptern" sollen in diesem Zusammenhang insbesondere verschiedene Wischarmadaptersysteme verstanden werden, die sich in ihrem Aufbau und/oder in ihrer Befestigungsfunktion unterscheiden. Bevorzugt handelt es sich um verschieden genormte Wischarmadaptersysteme. Unter einer ersten Bauart eines Wischarmadapters soll dabei in diesem Zusammenhang insbesondere ein Wischarmadapter verstanden werden, der einen Befestigungsstift und eine Auflageplatte aufweist. Unter einer weiteren möglichen Bauart eines Wischarmadapters soll dabei in diesem Zusammenhang insbesondere ein Wischarmadapter verstanden werden, der einen lang gestreckten hakenförmigen Grundkörper mit einer Biegung von 180° aufweist. Unter einer weiteren möglichen Bauart eines Wischarmadapters soll dabei in diesem Zusammenhang insbesondere ein Wischarmadapter verstanden werden, der zwei Rückanschläge und eine Befestigungsnase aufweist. Unter einer weiteren möglichen Bauart eines Wischarmadapters soll dabei in diesem Zusammenhang insbesondere ein Wischarmadapter verstanden werden, der eine Befestigungsausnehmung und einen Grundkörper mit einem s-förmigen Profil aufweist. Unter einer weiteren möglichen Bauart eines Wischarmadapters soll dabei in diesem Zusammenhang insbesondere ein Wischarmadapter verstanden werden, der eine Befestigungsausnehmung und Wandungen mit Befestigungsmitteln aufweist. Unter "gekoppelt" soll dabei in diesem Zusammenhang insbesondere kraft- und/oder formschlüssig verbunden verstanden werden. Unter einer "Getriebeeinheit" soll in diesem Zusammenhang insbesondere eine Einheit verstanden werden, die dazu vorgesehen ist, aus einer Bewegung eines ersten Bauteils in eine erste Bewegungsrichtung heraus zumindest ein weiteres Bauteil in eine weitere Bewegungsrichtung, die insbesondere von der ersten Bewegungsrichtung differiert, zu bewegen. Insbesondere stehen die erste Bewegungsrichtung und die weitere Bewegungsrichtung zumindest im Wesentlichen senkrecht zueinander. Unter "zumindest im Wesentlichen" soll in diesem Zusammenhang insbesondere eine Abweichung von maximal 30°, bevorzugt von maximal 15° besonders bevorzugt von maximal 5° verstanden werden. Unter einem "Demontagevorgang" soll in diesem Zusammenhang insbesondere ein Vorgang verstanden werden, bei welchem zumindest ein Verbindungselement von der Wischblattadaptereinheit gelöst wird. Unter "vorgesehen" soll insbesondere speziell ausgelegt und/oder ausgestattet verstanden werden.

In der Erfindung wird vorgeschlagen, dass die Wischblattadaptereinheit eine Kopplungseinheit umfasst, die dazu vorgesehen ist, in einem Montagevorgang von einem Endbenutzer mit einem der zumindest zwei Verbindungselemente gekoppelt zu werden, wodurch bei gleichzeitig geringem Produktionsaufwand vorteilhaft unterschiedliche Wischarmadaptersysteme mit dem Wischblattadaptersystem gekoppelt werden können. Unter einer "Kopplungseinheit" soll dabei in diesem Zusammenhang insbesondere eine Einheit verstanden werden, die dazu vorgesehen ist, ein Wischblatt mit einem Wischarm zu koppeln. Unter einem "Montagevorgang" soll in diesem Zusammenhang insbesondere ein Vorgang verstanden werden, der von einem Endbenutzer beziehungsweise Endverbraucher durchgeführt wird, wobei bei dem Vorgang zumindest ein abschließender Montageschritt vorgenommen wird, durch den das Wischblattadaptersystem in einen Betriebszustand genommen werden kann. Unter einem "Endbenutzer" soll in diesem Zusammenhang insbesondere ein Endverbraucher und/oder eine Privatperson verstanden werden, der und/oder die zumindest gewöhnliche technische Fertigkeiten besitzt. Insbesondere weicht der Endbenutzer von einem Produktions- und/oder Werkstattmitarbeiter und/oder einer Person mit umfangreichen technischen Fertigkeiten und/oder einem Fachmann auf dem betreffenden technischen Gebiet ab. Weiterhin vorteilhaft erfolgt eine Montage durch den Endbenutzer werkzeuglos.

Ferner wird vorgeschlagen, dass die Kopplungseinheit zumindest eine erste Kulissenführung aufweist, die zu einer Führung von einem der zumindest zwei Verbindungselemente vorgesehen ist, wodurch eine bestimmte, vorgegebene Bewegung des Verbindungselements relativ zur Kopplungseinheit vorteilhaft erzielt werden kann. Unter einer "Kulissenführung" soll in diesem Zusammenhang insbesondere eine Kulissenbahn verstanden werden, in welcher ein Verbindungselement in zumindest einer Ebene zwangsgeführt ist. Eine Übertragungsfunktion der Kulissenführung wird ausschließlich durch den Verlauf der Kulissenbahn bestimmt. Bevorzugt ist die Kulissenbahn von einer Nut gebildet. Bevorzugt weist die Kopplungseinheit eine erste Kulissenführung und eine zweite Kulissenführung auf.

Eine Schwenkbewegung des Verbindungselements relativ zur Kopplungseinheit kann besonders präzise erfolgen, wenn zumindest die erste Kulissenführung eine Krümmung aufweist. Bevorzugt liegt ein Krümmungsmittelpunkt der Krümmung auf einer Schwenkachse des Verbindungselements um die Kopplungseinheit. Weiterhin bevorzugt ist die Kulissenführung kreisbogenförmig ausgebildet.

Ferner wird vorgeschlagen, dass die Kopplungseinheit zumindest ein Kopplungselement umfasst, das in einem montierten Zustand formschlüssig an einem der zumindest zwei Verbindungselemente anliegt und dazu vorgesehen ist, ein Lösen des Verbindungselements von der Wischblattadaptereinheit zu vermeiden, wodurch eine besonders sichere Kopplung des Verbindungselements an der Kopplungseinheit erreicht werden kann. Unter einem "Kopplungselement" soll in diesem Zusammenhang insbesondere ein Element verstanden werden, das zu einer form- und/oder kraftschlüssigen Kopplung mit einem weiteren Bauteil vorgesehen ist.

Eine bewegliche Lagerung des Verbindungselements kann erreicht werden, wenn das Kopplungselement eine gekrümmte Lagerfläche aufweist, die dazu vorgesehen ist, zumindest eines der Verbindungselemente in einem montierten Zustand schwenkbar zu lagern. Unter einer "Lagerfläche" soll in diesem Zusammenhang insbesondere eine Fläche verstanden werden, die zur Lagerung eines Bauteils vorgesehen ist.

Besonders flexibel kann das Wischblattadaptersystem eingesetzt werden, wenn das Wischblattadaptersystem zumindest drei unterschiedlich geformte Verbindungselemente umfasst, die zu einer Kopplung mit unterschiedlichen Bauarten von Wischarmadaptern vorgesehen sind. Insbesondere weisen die unterschiedlichen Bauarten von Wischarmadapter unterschiedlich angeordnete Lagerflächen, Lagerelemente und/oder Abdeckelemente. Zumindest eines der zumindest zwei Verbindungselemente weist zumindest eine erste elastisch auslenkbare Seitenwandung auf, die zur Kopplung mit der Kopplungseinheit vorgesehen ist. Vorteilhaft weist zumindest eines der zumindest zwei Verbindungselemente eine zweite elastisch auslenkbare Seitenwandung auf.

Des Weiteren wird vorgeschlagen, dass zumindest die erste Seitenwandung eine Querausnehmung umfasst, in welche die Kopplungseinheit in einem montierten Zustand zumindest teilweise eingreift, wodurch die Wischblatt-adaptereinheit besonders kompakt ausgebildet werden kann. Unter einer "Querausnehmung" soll in diesem Zusammenhang insbesondere eine Ausnehmung verstanden werden, die sich in einer Haupterstreckungsrichtung parallel zu einer Wischrichtung erstreckt und/oder eine senkrecht zur Wischrichtung stehende Wandung in Wischrichtung durchläuft.

Eine besonders sichere Kopplung kann erreicht werden, wenn zumindest ein Verbindungselement der zumindest zwei Verbindungselemente zumindest ein erstes Führungselement aufweist, das dazu vorgesehen ist, in zumindest der ersten Kulissenführung geführt zu werden.

Ein Demontagevorgang kann vorteilhaft einfach erfolgen, wenn zumindest das erste Führungselement halbkugelförmig ausgebildet ist. Unter "halbkugelförmig" soll in diesem Zusammenhang insbesondere einer Halbkugel ähnlich verstanden werden.

Ferner wird vorgeschlagen, dass die zumindest zwei unterschiedlich geformten Verbindungselemente jeweils zu einer Kopplung mit unterschiedlichen Bauarten von Wischarmadaptern vorgesehen sind, wodurch das Wischblatt-adaptersystem vorteilhaft besonders flexibel angewendet werden kann.

Des Weiteren wird vorgeschlagen, dass die Kopplungseinheit dazu vorgesehen ist, mit einem der zumindest zwei Verbindungselemente lösbar gekoppelt zu werden, wodurch das Wischblattadaptersystem vorteilhaft modular und flexibel eingesetzt werden kann. Unter "lösbar" soll in diesem Zusammenhang insbesondere zerstörungsfrei trennbar verstanden werden.

Ein besonders einfacher Aufbau kann erreicht werden, wenn das Kopplungs-element von einem zumindest im Wesentlichen zylinderförmigen Befestigungselement gebildet ist.

Gewicht und Herstellungskosten können vorteilhaft eingespart werden, wenn das Befestigungselement eine Längsausnehmung umfasst. Unter einer "Längsausnehmung" soll in diesem Zusammenhang insbesondere eine Ausnehmung verstanden werden, die sich in einer Haupterstreckungsrichtung zumindest im Wesentlichen parallel zu einer Wischrichtung erstreckt. Bevorzugt weist die Längsausnehmung einen runden, besonders bevorzugt einen kreisrunden Querschnitt auf. Vorteilhaft ist das Kopplungselement von einem Hülsenelement gebildet.

Eine besonders einfache und sichere Demontage des Wischblattadaptersystems kann erfolgen, wenn die Getriebeeinheit zumindest eine Rampenfläche aufweist, die zu einer Kulissenführungsgrundfläche einen spitzen Winkel einschließt und dazu vorgesehen ist, bei einem Demontagevorgang zumindest die erste Seitenwandung auszulenken. Insbesondere erfolgt der Demontagevorgang durch ein Schwenken des Verbindungselements relativ zur Wischblattadaptereinheit. Unter einer "Rampenfläche" soll in diesem Zusammenhang insbesondere eine Fläche verstanden werden, über welche bei einem Demontagevorgang das Verbindungselement geführt und dabei aus der Kulissenführung bewegt werden kann. Unter einer Kulissenführungsgrundfläche soll in diesem Zusammenhang insbesondere eine Grundfläche einer Kulissenführung verstanden werden, die von Seitenwänden, die zu einer seitlichen Zwangsführung einer Kulisse vorgesehen sind, begrenzt ist.

In einer weiteren Ausgestaltung der Erfindung wird vorgeschlagen, dass die Rampenfläche bei einem Demontagevorgang zumindest am ersten Führungselement anliegt und eine Auslenkkraft auf zumindest die erste Seitenwandung ausübt, wodurch ein Auslenken der Seitenwandung besonders zuverlässig erfolgen kann.

Ferner wird vorgeschlagen, dass die Wischblattadaptereinheit zumindest zwei Längsstege aufweist, die zumindest im Wesentlichen parallel zueinander verlaufen und an einem Grundkörper der Wischblattadaptereinheit angeordnet sind, wodurch eine besonders große Kontaktfläche für eine Kopplung einer Wischleiste erzielt werden kann.

Des Weiteren wird vorgeschlagen, dass die Wischblattadaptereinheit eine Schräganschlagfläche aufweist, die dazu vorgesehen ist, eine Auslenkung eines Verbindungselements der zumindest zwei Verbindungselemente relativ zu einem Grundkörper der Wischblattadaptereinheit zu begrenzen, wodurch ein übermäßiges Schwenken eines Verbindungselements relativ zum Grundkörper vorteilhaft vermieden werden kann.

Eine besonders schnelle Demontage eines Wischblattadaptersystems kann erfolgen, wenn ein Verbindungselement von einer Wischblattadaptereinheit gelöst wird, indem das Verbindungselement einseitig angehoben wird. Unter "einseitig" soll in diesem Zusammenhang insbesondere, in eine Längsrichtung betrachtet, in lediglich einem Randbereich des Verbindungselements verstanden werden. Unter "anheben" soll in diesem Zusammenhang insbesondere von einer Wischfläche wegbewegen verstanden werden. Unter einer "Längsrichtung" soll in diesem Zusammenhang insbesondere eine Richtung verstanden werden, die sich im Wesentlichen parallel zu einer Längserstreckung des Verbindungselements erstreckt. Unter einer "Längserstreckung" soll in diesem Zusammenhang insbesondere eine größtmögliche Erstreckung verstanden werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: drei Verbindungselemente eines erfindungsgemäßen Wischblattadaptersystems und Wischarmadapter von verschiedenen Wischarmadaptersystemen in einer perspektivischen Ansicht,
- Fig. 2: eine Wischblattadaptereinheit des Wischblattadaptersystems aus Figur 1 in einer perspektivischen Ansicht,
- Fig. 3: die Wischblattadaptereinheit aus Figur 2 und ein Verbindungselement in einer perspektivischen Ansicht,
- Fig. 4: die Wischblattadaptereinheit aus Figur 2 und das Verbindungselement aus Figur 3 in einem Teilschnitt,
- Fig. 5: die Wischblattadaptereinheit aus Figur 2 und das Verbindungselement aus Figur 3 in einem weiteren Teilschnitt,
- Fig. 6: die Wischblattadaptereinheit aus Figur 2 und das Verbindungselement aus Figur 3 in einem montierten Zustand,
- Fig. 7: die Wischblattadaptereinheit aus Figur 2 und das Verbindungselement aus Figur 3 bei einem Demontagevorgang in einem Teilschnitt und
- Fig. 8: die Wischblattadaptereinheit aus Figur 2 und das Verbindungselement aus Figur 3 in einer Seitenansicht.

### Beschreibung des Ausführungsbeispiels

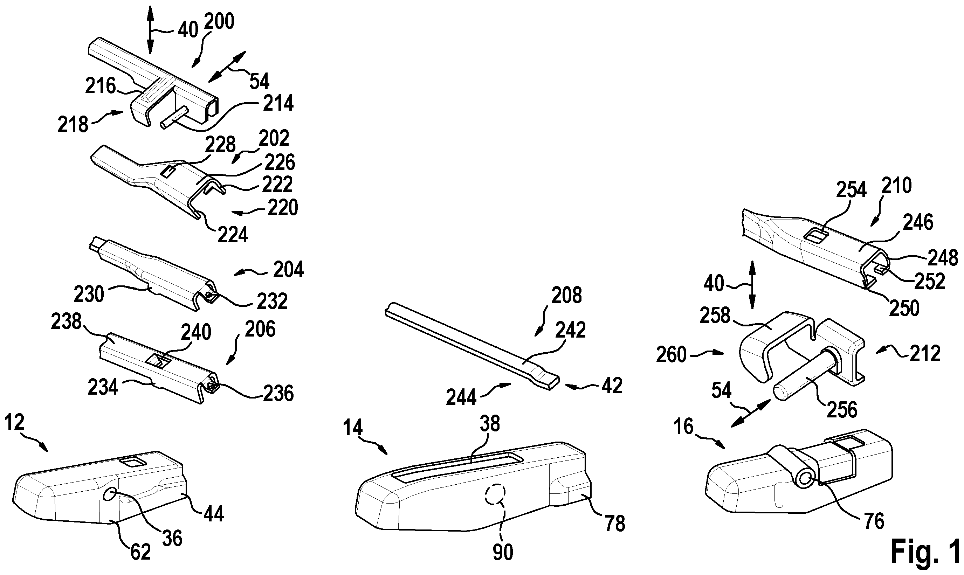

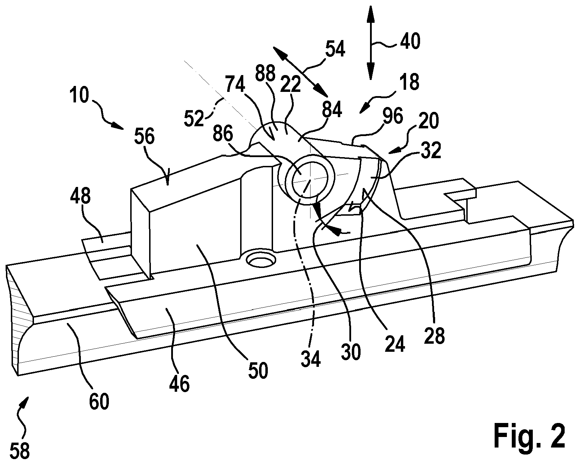

Figur 1 zeigt drei unterschiedlich geformte Verbindungselemente 12, 14, 16 eines erfindungsgemäßen Wischblattadaptersystems. Das Wischblattadaptersystem ist zur Kopplung verschiedener Wischarmadaptersysteme mit einem Wischblatt 58 vorgesehen (Figur 2). Dazu sind die drei unterschiedlich geformten Verbindungselemente 12, 14, 16 zu einer Kopplung mit unterschiedlichen Bauarten von Wischarmadaptern 200, 202, 204, 206, 208, 210, 212 vorgesehen. Die Wischarmadapter 200, 202, 204, 206, 208, 210, 212 der unterschiedlichen Wischarmadaptersysteme sind bereits aus dem Stand der Technik bekannt und zumindest teilweise genormt.

Das erste Verbindungselement 12 ist zur Kopplung mit vier unterschiedlich ausgeformten Wischarmadaptern 200, 202, 204, 206 vorgesehen. Der erste Wischarmadapter 200 weist dabei einen Befestigungsstift 214 und eine Auflageplatte 216 auf. Der Befestigungsstift 214 erstreckt sich parallel zu einer Wischrichtung 54 des Wischblattadaptersystems. Die Auflageplatte 216 erstreckt sich zunächst parallel zum Befestigungsstift 214 und knickt in einem Endbereich 218 um 90° in eine Vertikalrichtung 40 des Wischblattadaptersystems ab. Das erste Verbindungselement 12 weist eine Querausnehmung 36 auf, die zur Aufnahme des Befestigungsstifts 214 des Wischarmadapters 200 vorgesehen ist. Der zweite Wischarmadapter 202 weist einen U-förmigen Aufnahmebereich 220 auf, der von zwei parallel zueinander verlaufenden Seitenwandungen 222, 224 und einer Auflagewandung 226 aufgespannt ist. Die Auflagewandung 226 ist senkrecht zu den Seitenwandungen 222, 224 angeordnet. In der Auflagewandung 226 ist eine Positionierungsausnehmung 228 angeordnet, die zu einer definierten Positionierung des zweiten Wischarmadapters 202 am Verbindungselement 12 vorgesehen ist. Der dritte Wischarmadapter 204 weist zwei Rückanschläge 230, die von Seitenwandungen gebildet sind, und eine Befestigungsnase 232 auf. Die Befestigungsnase 232 ist an einem freien Ende des dritten Wischarmadapters 204 als Fortsatz ausgebildet. Der vierte Wischarmadapter 206 weist zwei Rückanschläge 234, die von Seitenwandungen gebildet sind, und eine Befestigungsnase 236 auf. Die Befestigungsnase 236 ist an einem freien Ende des vierten Wischarmadapters 206 als Fortsatz ausgebildet. Ferner umfasst der vierte Wischarmadapter 206 eine Auflagewandung 238, in welcher eine Positionierungsausnehmung 240 angeordnet ist, die zu einer definierten Positionierung des vierten Wischarmadapters 206 am Verbindungselement 12 vorgesehen ist. Der erste Wischarmadapter 200, der zweite Wischarmadapter 202, der dritte Wischarmadapter 204 und der vierte Wischarmadapter 206 sind auf eine bekannte Art und Weise mit dem ersten Verbindungselement 12 lösbar koppelbar.

Das zweite Verbindungselement 14 ist zur Kopplung mit einem fünften Wischarmadapter 208 vorgesehen, der eine weitere Bauart aufweist. Der fünfte Wischarmadapter 208 weist einen Befestigungsarm 242 auf, der in einem Endbereich 244 eine S-förmige Biegung aufweist. Der fünfte Wischarmadapter 208 ist auf eine bekannte Art und Weise mit dem zweiten Verbindungselement 14 lösbar koppelbar.

Das dritte Verbindungselement 16 ist zur Kopplung mit dem sechsten Wischarmadapter 210 und dem siebten Wischarmadapter 212 vorgesehen, die jeweils in einer weiteren Bauweise ausgeformt sind. Der sechste Wischarmadapter 210 weist eine Grundwandung 246 auf, an welcher zwei Seitenwandungen 248, 250 angeordnet sind. Die Seitenwandungen 248, 250 schließen jeweils mit der Grundwandung 246 einen Winkel von 90° ein. An einem unteren Ende der jeweiligen Seitenwandung 248, 250 sind Befestigungsmittel 252 angeordnet, die wiederum einen Winkel von 90° zu den Seitenwandungen 248, 250 einschließen. In der Grundwandung 246 des Wischarmadapters 210 ist zusätzlich eine Befestigungsausnehmung 254 angeordnet. Der siebte Wischarmadapter 212 weist einen Befestigungsstift 256 und eine Auflageplatte 258 auf. Der Befestigungsstift 256 erstreckt sich parallel zu einer Wischrichtung 54 des Wischblattadaptersystems. Die Auflageplatte 258 erstreckt sich zunächst parallel zum Befestigungsstift 256 und knickt in einem Endbereich 260 um 90° in die Vertikalrichtung 40 ab. Der sechste Wischarmadapter 210 und der siebte Wischarmadapter 212 sind auf eine bekannte Art und Weise mit dem dritten Verbindungselement 16 lösbar koppelbar.

Das erste Verbindungselement 12 weist ferner eine Seitenausformung 44 auf. Die Seitenausformung 44 tritt aus einer Wandung des ersten Verbindungs-elements 12 heraus und bildet einen Griffbereich für einen Benutzer. Das zweite Verbindungselement 14 weist eine Längsausnehmung 38 auf, die das Verbindungselement 14 in Vertikalrichtung 40 hin öffnet und die zur Aufnahme eines Wischarmadapterendbereichs 42 vorgesehen ist. Das zweite Verbindungselement 14 weist eine Seitenausformung 78 auf. Die Seitenausformung 78 tritt aus einer Wandung des zweiten Verbindungselements 14 heraus und bildet einen Griffbereich für einen Benutzer. Das dritte Verbindungs-element 16 weist eine Querausnehmung 76 auf, die zur Aufnahme des Befestigungsstifts 256 des Wischarmadapters 212 vorgesehen ist.

Das Wischblattadaptersystem weist ferner eine Wischblattadaptereinheit 10 auf, wie in Figur 2 gezeigt. Die Wischblattadaptereinheit 10 umfasst eine Kopplungseinheit 18, die dazu vorgesehen ist, in einem Montagevorgang von einem Endbenutzer mit einem der drei Verbindungselemente 12, 14, 16 gekoppelt zu werden. Die Wischblattadaptereinheit 10 weist dazu einen Kontaktbereich zu einem der drei Verbindungselemente 12, 14, 16 auf. In einem montierten Zustand ist die Wischblattadaptereinheit 10 mit einem der drei Verbindungselemente 12, 14, 16 gekoppelt, beziehungsweise unverlierbar verbunden. Die Wischblattadaptereinheit 10 weist zwei Längsstege 46, 48 auf, die parallel zueinander verlaufen und an einem Grundkörper 50 der Wischblattadaptereinheit 10 angeordnet sind. Die Längsstege 46, 48 sind zu einer Verbindung mit weiteren Bauteilen des Wischblatts 58 vorgesehen, wie insbesondere einer Wischleiste 60, einer Federschiene, einem Windabweiser und/oder einer Wischlippe.

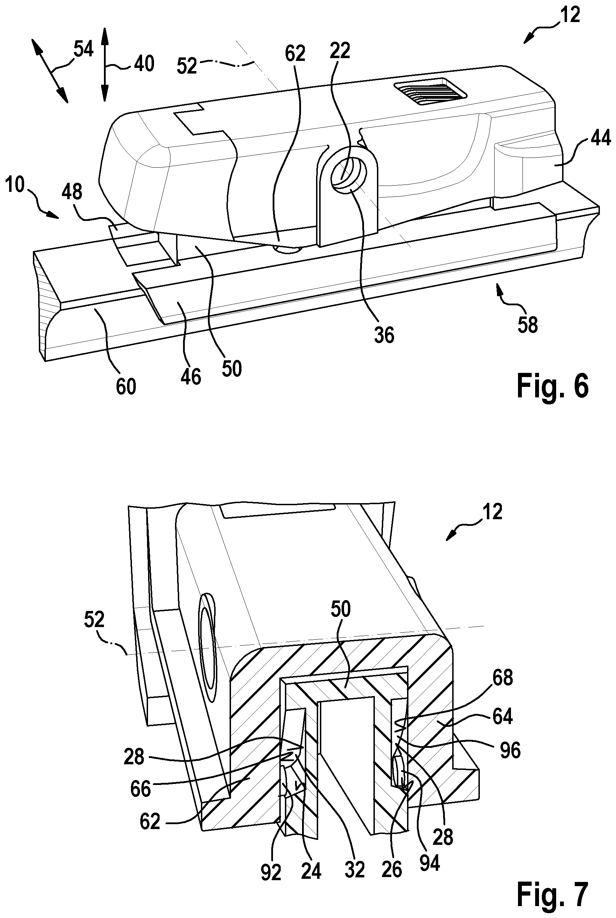

Die Wischblattadaptereinheit 10 umfasst eine Getriebeeinheit 20, die bei einem Demontagevorgang eine Kopplung zwischen dem zumindest einen Verbindungselement 12, 14, 16 und der Wischblattadaptereinheit 10 löst. Die Kopplungseinheit 18 weist eine erste Kulissenführung 32 auf, die zu einer Führung von einem der zumindest zwei Verbindungselemente 12, 14, 16 vorgesehen ist. Die Kulissenführung 32 ist seitlich, also in einer senkrecht zur Wischrichtung 54 stehenden Fläche, im Grundkörper 50 angeordnet. Eine zweite Kulissenführung 96 ist analog zur ersten Kulissenführung 32 spiegelsymmetrisch in einer rückseitigen Wandung des Grundkörpers 50 angeordnet und ebenfalls zur Führung von einem der zumindest zwei Verbindungselemente 12, 14, 16 vorgesehen (Figur 7). Die erste Kulissenführung 32 weist eine Krümmung auf. Ein Krümmungsmittelpunkt 34 der Krümmung liegt auf einer Schwenkachse 52 des Verbindungselements 12, 14, 16 um die Kopplungseinheit 18. Weiterhin bevorzugt ist die erste Kulissenführung 32 kreisbogenförmig ausgebildet. Die zweite Kulissenführung 96 weist ebenfalls eine Krümmung auf. Ein Krümmungsmittelpunkt 34 der Krümmung liegt auf der Schwenkachse 52 des Verbindungselements 12, 14, 16 um die Kopplungs-einheit 18. Weiterhin bevorzugt ist die zweite Kulissenführung 96 kreisbogenförmig ausgebildet.

Die erste und zweite Kulissenführung 32, 96 weisen jeweils eine Kulissenführungsgrundfläche 28 auf, die von Seitenwänden begrenzt wird. Die Seitenwände stehen im Winkel von 90° zur Kulissenführungsgrundfläche 28. Die Kulissenführungsgrundfläche 28 ist als ständiger Anschlag für ein in der Kulissenführung 32, 96 zu führendes Element vorgesehen. Die Seitenwände dienen als seitliche Führung beziehungsweise Zwangsführung. Die Kulissenführungsgrundfläche 28 verläuft senkrecht zur Wischrichtung 54 und parallel zur Vertikalrichtung 40.

Die Kopplungseinheit 18 ist dazu vorgesehen, mit einem der drei Verbindungselemente 12, 14, 16 lösbar gekoppelt zu werden. In anderen Worten lässt sich ein mit der Kopplungseinheit 18 gekoppeltes Verbindungselement 12, 14, 16 von der Kopplungseinheit 18 wieder zerstörungsfrei trennen. Dazu umfasst die Kopplungseinheit 18 ein Kopplungselement 22, das in einem montierten Zustand formschlüssig an einem der drei Verbindungselemente 12, 14, 16 anliegt und ein Lösen des Verbindungselements 12, 14, 16 von der Wischblattadaptereinheit 10 vermeidet. Es ist in diesem Zusammenhang auch denkbar, dass die Kopplungseinheit 18 weitere Kopplungselemente umfasst.

Das erste Kopplungselement 22 ist von einem zylinderförmigen Befestigungselement 84 gebildet. Das Befestigungselement 84 umfasst eine Längsausnehmung 86. Die Längsausnehmung 86 erstreckt sich in eine Haupterstreckungsrichtung des Befestigungselements 84. Ferner weist die Längsausnehmung 86 einen kreisrunden Querschnitt auf. Somit ist das erste Kopplungselement 22 von einem Hülsenelement 88 gebildet. Das erste Kopplungselement 22 weist dabei eine gekrümmte Lagerfläche 74 auf, die zumindest eines der Verbindungselemente 12, 14, 16 in einem montierten Zustand schwenkbar lagert. Die Schwenkachse 52 des Verbindungselements 12, 14, 16 um die Kopplungseinheit 18 verläuft dabei koaxial zu dem zylinderförmigen Befestigungselement 84 und dem kreisrunden Querschnitt der Längsausnehmung 86 des Befestigungselements 84.

Das erste Kopplungselement 22 erstreckt sich parallel zur Wischrichtung 54. Das erste Kopplungselement 22 ist am Grundkörper 50 angeordnet. Ferner erstreckt sich das erste Kopplungselement 22, in Wischrichtung 54 betrachtet, über den Grundkörper 50 beidseitig hinaus.

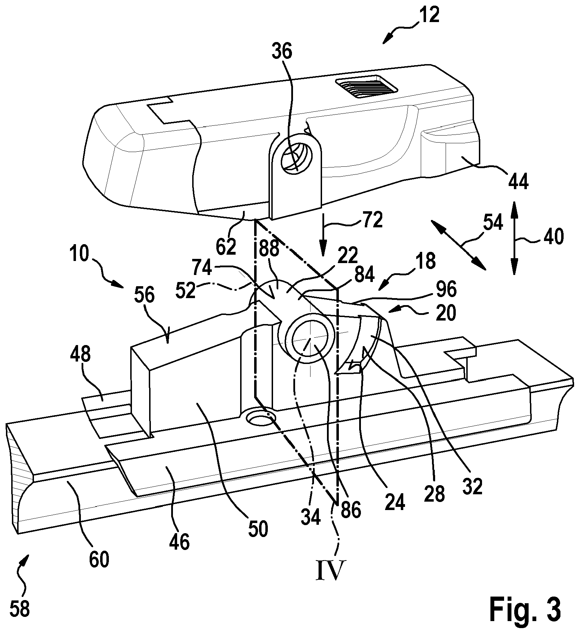

In den Figuren 3 bis 6 ist beispielhaft ein Montagevorgang des ersten Verbindungselements 12 mit der Kopplungseinheit 18 gezeigt. Der prinzipielle Montagevorgang beschränkt sich jedoch nicht auf das erste Verbindungselement 12, sonders kann analog auf das zweite und dritte Verbindungselement 14, 16 übertragen werden.

In Figur 3 ist eine Ausgangsposition des Montagevorgangs gezeigt. Das Verbindungselement 12 ist oberhalb der Wischblattadaptereinheit 10 angeordnet. Bei dem Montagevorgang wird das Verbindungselement 12 in einer Linearbewegung in einen Endkopplungszustand mit der Kopplungseinheit 18 geführt. Die Linearbewegung erfolgt dabei in einer Montagerichtung 72, die sich zumindest im Wesentlichen parallel zur Vertikalrichtung 40 in Richtung der Wischblattadaptereinheit 10 erstreckt. Die Wischblattadaptereinheit 10 weist eine Schräganschlagfläche 56 auf, die eine Auslenkung des ersten Verbindungselements 12 relativ zum Grundkörper 50 der Wischblattadaptereinheit 10 in einem montierten Zustand begrenzt. Die Schräganschlagfläche 56 ist an einer vom Wischblatt 58 abgewandten Seite des Grundkörpers 50 angeordnet. Die Schräganschlagfläche 56 schließt einen spitzen Winkel zu den zwei Längsstegen 46, 48 der Wischblattadaptereinheit 10 ein.

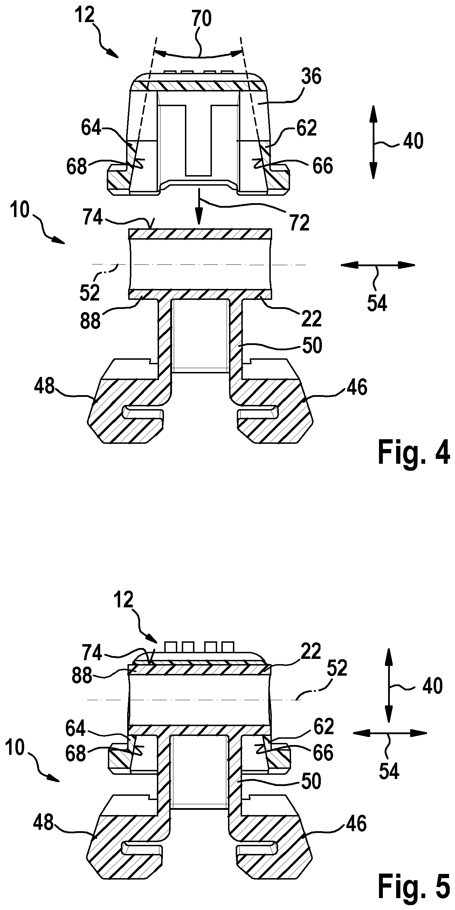

Figur 4 zeigt einen ersten Montageschritt des Montagevorgangs. Aus Gründen der Übersichtlichkeit ist das Wischblatt 58 nicht dargestellt. Das erste Verbindungselement 12 wird von einem nicht dargestellten Endbenutzer an die Wischblattadaptereinheit 10 bewegt. Das erste Verbindungselement 12 weist eine erste und eine zweite elastisch auslenkbare Seitenwandung 62, 64 auf, die zur Kopplung mit der Kopplungseinheit 18 vorgesehen sind. Die Seitenwandungen 62, 64 weisen parallel zueinander verlaufende, nicht näher bezeichnete Schwenkachsen auf. Ferner sind die Seitenwandungen 62, 64 auf einander zugewandten Innenflächen 66, 68 abgeschrägt. Die Innenflächen 66, 68 schließen dabei zusammen einen spitzen Winkel 70 ein. In Montagerichtung 72 betrachtet, die sich zumindest im Wesentlichen parallel zur Vertikalrichtung 40 in Richtung der Wischblattadaptereinheit 10 erstreckt, verlaufen die Innenflächen 66, 68 fluchtend zueinander.

Während des ersten Montageschritts kommen die abgeschrägten Innenflächen 66, 68 der Seitenwandungen 62, 64 mit dem ersten Kopplungselement 22 der Kopplungseinheit 18 in Anlage. Das Kopplungselement 22 übt daraufhin eine Auslenkkraft über die Innenflächen 66, 68 auf die Seitenwandungen 62, 64 aus. Somit resultiert die Bewegung des Verbindungselements 12 in Montagerichtung 72 in eine Auslenkung der Seitenwandungen 62, 64. Beim Auslenken werden die Seitenwandungen 62, 64 voneinander wegbewegt. Die benötigte Auslenkkraft hängt dabei sowohl vom verwendeten Material als auch von einer verwendeten Wandstärke der Seitenwandungen 62, 64 und einer Länge des Kopplungselements 22 ab.

Die Querausnehmung 36 des ersten Verbindungselements 12 ist zur formschlüssigen Kopplung mit dem Kopplungselement 22 vorgesehen. In einem montierten Zustand greift die Kopplungseinheit 18 in die Querausnehmung 36 ein. Analog hierzu ist eine Querausnehmung 90 des zweiten Verbindungs-elements 14 und die Querausnehmung 76 des dritten Verbindungselements 16 ebenfalls zur formschlüssigen Kopplung mit dem Kopplungselement 22 vorgesehen. Nach einer Kopplung des ersten Verbindungselements 12 mit der Wischblattadaptereinheit 10 füllt das Kopplungselement 22 die Querausnehmung 36 somit vollständig aus (Figur 5).

In Figur 6 ist das Wischblattadaptersystem in einem montierten Zustand gezeigt. Über die Querausnehmung 36 und das Kopplungselement 22 ist das erste Verbindungselement 12 schwenkbar an der Wischblattadaptereinheit 10 gelagert.

In Figur 7 ist das erste Verbindungselement 12 in einer perspektivischen Schnittdarstellung gezeigt. Aus Gründen der Übersichtlichkeit ist das Wischblatt 58 nicht dargestellt. Die Schnittebene verläuft dabei durch die Kulissenführungen 32, 96. An den Seitenwandungen 62, 64 sind ein erstes Führungs-element 92 und ein zweites Führungselement 94 angeordnet. Das erste Führungselement 92 und das zweite Führungselement 94 sind einander zugewandt und grenzen an den Innenflächen 66, 68 an. Das erste Führungselement 92 und das zweite Führungselement 94 sind jeweils halbkugelförmig ausgebildet. Das erste Führungselement 92 und das zweite Führungselement 94 werden in einem Betriebszustand und bei einem Demontagevorgang in der ersten Kulissenführung 32 beziehungsweise in der zweiten Kulissenführung 96 geführt.

Im gezeigten Beispiel greift das erste Führungselement 92 in die erste Kulissenführung 32. Das zweite Führungselement 94 greift in die zweite Kulissenführung 96. Bei einem Schwenkvorgang des ersten Verbindungselements 12 relativ zur Wischblattadaptereinheit 10 um die Schwenkachse 52 bewegen sich die Führungselemente 92, 94 in den Kulissenführungen 32, 96.

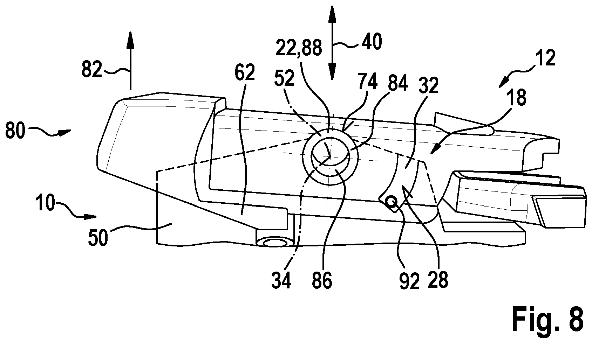

Zu einer Demontage wird das Verbindungselement 12 von der Wischblatt-adaptereinheit 10 gelöst. Dafür wird das Verbindungselement 12 einseitig angehoben, wie in Figur 8 gezeigt. Anders ausgedrückt, übt ein Benutzer zu einer Demontage eine Anhebekraft 82 in einem Anhebebereich 80 aus, der an einem freien Ende des Verbindungselements 12 angeordnet ist. Die Anhebekraft 82 verläuft zumindest im Wesentlichen parallel zur Vertikalrichtung 40. Der Anhebebereich 80 ist der Seitenausformung 44 gegenüberliegend angeordnet.

Die Getriebeeinheit 20 weist eine erste Rampenfläche 24 auf, die zur Kulissenführungsgrundfläche 28 einen spitzen Winkel 30 einschließt und bei einem Demontagevorgang die erste Seitenwandung 62 und die zweite Seitenwandung 64 auslenkt. Eine weitere Rampenfläche 26 der Getriebeeinheit 20 ist in der zweiten Kulissenführung 96 angeordnet.

Die Rampenflächen 24, 26 grenzen jeweils an die Seitenwände der Kulissenführungen 32, 96 an. Ein innerhalb der Kulissenführung 32, 96 bewegtes Bauteil gleitet somit zunächst über die Kulissenführungsgrundfläche 28 und anschließend über die Rampenfläche 24, die das Bauteil aus der Kulissenführung 32, 96 herausführt.

Beim Anheben des Verbindungselements 12 im Anhebebereich 80 wird dieses um die Schwenkachse 52 geschwenkt. Die Führungselemente 92, 94 bewegen sich in den Kulissenführungen 32, 96 bis an die Rampenfläche 24. Anschließend werden die Führungselemente 92, 94 von der Rampenfläche 24 aus den Kulissenführungen 32, 96 herausbewegt.

Die Rampenflächen 24, 26 liegen also bei dem Demontagevorgang am ersten und zweiten Führungselement 92, 94 an und üben eine Auslenkkraft auf die erste und zweite Seitenwandung 62, 64 aus. Die Seitenwandungen 62, 64 des ersten Verbindungselements 12 werden dabei elastisch ausgelenkt.

Durch die elastisch ausgelenkten Seitenwandungen 62, 64 wird die formschlüssige Kopplung des ersten Verbindungselements 12 mit dem Kopplungselement 22 aufgelöst. In anderen Worten wird das erste Verbindungs-element 12 in Folge des Anhebens im Anhebebereich 80 von der Kopplungs-einheit 18 über die Getriebeeinheit 20 gelöst beziehungsweise zerstörungsfrei getrennt. Somit wird das Verbindungselement 12 von der Wischblattadaptereinheit 10 gelöst, indem das Verbindungselement 12 einseitig angehoben wird.

## Patentansprüche

1. Wischblattadaptersystem mit einer Wischblattadaptereinheit (10) und mit zumindest zwei unterschiedlich geformten
Verbindungselementen (12, 14, 16), wobei die Wischblattadaptereinheit (10) in einem montierten Zustand mit einem der zumindest zwei Verbindungselemente (12, 14, 16) gekoppelt ist, wobei die Wischblattadaptereinheit (10) eine Getriebeeinheit (20) umfasst, die dazu vorgesehen ist, bei einem Demontagevorgang eine Kopplung zwischen dem zumindest einen Verbindungselement (12, 14, 16) und der Wischblattadaptereinheit (10) zu lösen und
wobei die Wischblattadaptereinheit (10) eine Kopplungseinheit (18) umfasst, die dazu vorgesehen ist, in einem Montagevorgang von einem Endbenutzer mit einem der zumindest zwei Verbindungselemente (12, 14, 16) gekoppelt zu werden, **dadurch gekennzeichnet, dass** zumindest eines der zumindest zwei Verbindungselemente (12, 14, 16) zumindest eine erste elastisch auslenkbare Seitenwandung (62, 64) aufweist, die zur Kopplung mit der Kopplungseinheit (18) vorgesehen ist.

2. Wischblattadaptersystem nach Anspruch 1, **dadurch gekennzeichnet, dass** die Kopplungseinheit (18) zumindest eine erste Kulissenführung (32) aufweist, die zu einer Führung von einem der zumindest zwei Verbindungselemente (12, 14, 16) vorgesehen ist.

3. Wischblattadaptersystem nach Anspruch 2, **dadurch gekennzeichnet, dass** zumindest die erste Kulissenführung (32) eine Krümmung aufweist.

4. Wischblattadaptersystem nach einem der vorhergehenden Ansprüche, **dadurch gekennzeichnet, dass** die Kopplungseinheit (18) zumindest ein erstes Kopplungselement (22) umfasst, das in einem montierten Zustand formschlüssig an einem der zumindest zwei Verbindungselemente (12, 14, 16) anliegt und dazu vorgesehen ist, ein Lösen des Verbindungselements (12, 14, 16) von der Wischblattadaptereinheit (10) zu vermeiden.

5. Wischblattadaptersystem nach Anspruch 4, **dadurch gekennzeichnet, dass** zumindest das erste Kopplungselement (22) eine gekrümmte Lagerfläche (74) aufweist, die dazu vorgesehen ist, zumindest eines der Verbindungselemente (12, 14, 16) in einem montierten Zustand schwenkbar zu lagern.

6. Wischblattadaptersystem nach einem der vorhergehenden Ansprüche, **gekennzeichnet durch** zumindest drei unterschiedlich geformte Verbindungselemente (12, 14, 16), die zu einer Kopplung mit unterschiedlichen Bauarten von Wischarmadaptern (200, 202, 204, 206, 208, 210, 212) vorgesehen sind.

7. Wischblattadaptersystem nach einem der vorhergehenden Ansprüche, **dadurch gekennzeichnet, dass** zumindest die erste Seitenwandung (62, 64) eine Querausnehmung (36, 76, 90) umfasst, in welche die Kopplungseinheit (18) in einem montierten Zustand zumindest teilweise eingreift.

8. Wischblattadaptersystem zumindest nach Anspruch 2, **dadurch gekennzeichnet, dass** zumindest ein Verbindungselement (12, 14, 16) der zumindest zwei Verbindungselemente (12, 14, 16) zumindest ein erstes Führungselement (92, 94) aufweist, das dazu vorgesehen ist, in zumindest der ersten Kulissenführung (32, 96) geführt zu werden.

9. Wischblattadaptersystem nach Anspruch 8, **dadurch gekennzeichnet, dass** zumindest das erste Führungselement (92, 94) halbkugelförmig ausgebildet ist.

10. Wischblattadaptersystem nach einem der vorhergehenden Ansprüche, **dadurch gekennzeichnet, dass** die zumindest zwei unterschiedlich geformten Verbindungselemente (12, 14, 16) jeweils zu einer Kopplung mit unterschiedlichen Bauarten von Wischarmadaptern (200, 202, 204, 206, 208, 210, 212) vorgesehen sind.

11. Wischblattadaptersystem nach einem der vorhergehenden Ansprüche, **dadurch gekennzeichnet, dass** die Kopplungseinheit (18) dazu vorgesehen ist, mit einem der zumindest zwei Verbindungselemente (12, 14, 16) lösbar gekoppelt zu werden.

12. Wischblattadaptersystem zumindest nach Anspruch 4, **dadurch gekennzeichnet, dass** zumindest das erste Kopplungselement (22) von einem zumindest im Wesentlichen zylinderförmigen Befestigungselement (84) gebildet ist.

13. Wischblattadaptersystem nach Anspruch 12, **dadurch gekennzeichnet, dass** das Befestigungselement (84) eine Längsausnehmung (86) umfasst.

14. Wischblattadaptersystem zumindest nach Anspruch 4, **dadurch gekennzeichnet, dass** zumindest das erste Kopplungselement (22) von einem Hülsenelement (88) gebildet ist.

15. Wischblattadaptersystem zumindest nach Anspruch 2, **dadurch gekennzeichnet, dass** die Getriebeeinheit (20) zumindest eine Rampenfläche (24, 26) aufweist, die zu einer Kulissenführungsgrundfläche (28) einen spitzen Winkel (30) einschließt und dazu vorgesehen ist, bei einem Demontagevorgang zumindest die erste Seitenwandung (62, 64) auszulenken.

16. Wischblattadaptersystem zumindest nach den Ansprüchen 10 und 17, **dadurch gekennzeichnet, dass** die Rampenfläche (24) bei einem Demontagevorgang zumindest am ersten Führungselement (92, 94) anliegt und eine Auslenkkraft auf zumindest die erste Seitenwandung (62, 64) ausübt.

17. Wischblattadaptersystem nach einem der vorhergehenden Ansprüche, **dadurch gekennzeichnet, dass** die Wischblattadaptereinheit (10) zumindest zwei Längsstege (46, 48) aufweist, die parallel zueinander verlaufen und an einem Grundkörper (50) der Wischblattadaptereinheit (10) angeordnet sind.

18. Wischblattadaptersystem nach einem der vorhergehenden Ansprüche, **dadurch gekennzeichnet, dass** die Wischblattadaptereinheit (10) eine Schräganschlagfläche (56) aufweist, die dazu vorgesehen ist, eine Auslenkung eines Verbindungselements (12, 14, 16) der zumindest zwei Verbindungselemente (12, 14, 16) relativ zu einem Grundkörper (50) der Wischblattadaptereinheit (10) zu begrenzen.

19. Wischblatt (58) mit einem Wischblattadaptersystem nach einem der vorhergehenden Ansprüche.

20. Verfahren zur Demontage eines Wischblattadaptersystems nach einem der Ansprüche 1 bis 18, wobei ein Verbindungselement (12, 14, 16) von einer Wischblattadaptereinheit (10) gelöst wird, indem das Verbindungselement (12, 14, 16) einseitig angehoben wird.

## Claims

1. Wiper blade adapter system with a wiper blade adapter unit (10) and with at least two differently shaped connecting elements (12, 14,16), wherein the wiper blade adapter unit (10) is coupled in a mounted state to one of the at least two connecting elements (12, 14, 16), wherein the wiper blade adapter unit (10) comprises a gearing unit (20) which is provided to release a coupling between the at least one connecting element (12, 14, 16) and the wiper blade adapter unit (10) during a removal operation, wherein the wiper blade adapter unit (10) comprises a coupling unit (18) which is provided to be coupled to one of the at least two connecting elements (12, 14, 16) by an end user in a mounting operation, **characterized in that** at least one of the at least two connecting elements (12, 14, 16) has at least one first elastically deflectable side wall (62, 64) which is provided for coupling to the coupling unit (18).

2. Wiper blade adapter system according to Claim 1, **characterized in that** the coupling unit (18) has at least one first slotted guide (32) which is provided for guiding one of the at least two connecting elements (12, 14, 16).

3. Wiper blade adapter system according to Claim 2, **characterized in that** at least the first slotted guide (32) has a curvature.

4. Wiper blade adapter system according to one of the preceding claims, **characterized in that** the coupling unit (18) comprises at least one first coupling element (22) which, in a mounted state, lies in a form-fitting manner against one of the at least two connecting elements (12, 14, 16) and is provided for avoiding release of the connecting element (12, 14, 16) from the wiper blade adapter unit (10).

5. Wiper blade adapter system according to Claim 4, **characterized in that** at least the first coupling element (22) has a curved bearing surface (74) which is provided to pivotably support at least one of the connecting elements (12, 14, 16) in a mounted state.

6. Wiper blade adapter system according to one of the preceding claims, **characterized by** at least three differently shaped connecting elements (12, 14, 16) which are provided for coupling to different types of wiper arm adapters (200, 202, 204, 206, 208, 210, 212).

7. Wiper blade adapter system.according to one of the preceding claims, **characterized in that** at least the first side wall (62, 64) comprises a transverse recess (36, 76, 90) in which the coupling unit (18) at least partially engages in a mounted state.

8. Wiper blade adapter system at least according to Claim 2, **characterized in that** at least one connecting element (12, 14, 16) of the at least two connecting elements (12, 14, 16) has at least one first guide element (92, 94) which is provided to be guided in at least the first slotted guide (32, 96).

9. Wiper blade adapter system according to Claim 8, **characterized in that** at least the first guide element (92, 94) is of hemispherical design.

10. Wiper blade adapter system according to one of the preceding claims, **characterized in that** the at least two differently shaped connecting elements (12, 14, 16) are each provided for coupling to different types of wiper arm adapters (200, 202, 204, 206, 208, 210, 212).

11. Wiper blade adapter system according to one of the preceding claims, **characterized in that** the coupling unit (18) is provided to be releaseably coupled to one of the at least two connecting elements (12, 14, 16).

12. Wiper blade adapter system at least according to Claim 4, **characterized in that** at least the first coupling element (22) is formed by an at least substantially cylindrical fastening element (84).

13. Wiper blade adapter system according to Claim 12, **characterized in that** the fastening element (84) comprises a longitudinal recess (86).

14. Wiper blade adapter system at least according to Claim 4, **characterized in that** at least the first coupling element (22) is formed by a sleeve element (88).

15. Wiper blade adapter system at least according to Claim 2, **characterized in that** the gearing unit (20) has at least one ramp surface (24, 26) which encloses an acute angle (30) with respect to a slotted guide main area (28) and is provided to deflect at least the first side wall (62, 64) during a removal operation.

16. Wiper blade adapter system at least according to Claims 10 and 17, **characterized in that**, during a removal operation, the ramp surface (24) lies at least against the first guide element (92, 94) and exerts a deflecting force on at least the first side wall (62, 64).

17. Wiper blade adapter system according to one of the preceding claims, **characterized in that** the wiper blade adapter unit (10) has at least two longitudinal webs (46, 48) which run parallel to each other and are arranged on a basic body (50) of the wiper blade adapter unit (10).

18. Wiper blade adapter system according to one of the preceding claims, **characterized in that** the wiper blade adapter unit (10) has an oblique stop surface (56) which is provided for limiting a deflection of one connecting element (12, 14, 16) of the at least two connecting elements (12, 14, 16) relative to a basic body (50) of the wiper blade adapter unit (10).

19. Wiper blade (58) with a wiper blade adapter system according to one of the preceding claims.

20. Method for removing a wiper blade adapter system according to one of Claims 1 to 18, wherein a connecting element (12, 14, 16) is released from a wiper blade adapter unit (10) by the connecting element (12, 14, 16) being raised on one side.

## Revendications

1. Système d'adaptateur de balai d'essuie-glace comprenant une unité d'adaptateur de balai d'essuie-glace (10) et au moins deux éléments de connexion (12, 14, 16) formés différemment, l'unité d'adaptateur de balai d'essuie-glace (10), dans un état monté, étant accouplée à l'un des au moins deux éléments de connexion (12, 14, 16), l'unité d'adaptateur de balai d'essuie-glace (10) comprenant une unité de transmission (20) qui est prévue pour libérer, au cours d'une opération de démontage, un accouplement entre l'au moins un élément de connexion (12, 14, 16) et l'unité d'adaptateur de balai d'essuie-glace (10), et l'unité d'adaptateur de balai d'essuie-glace (10) comprenant une unité d'accouplement (18) qui est prévue, dans une opération de montage, pour être accouplée par un utilisateur final à l'un des au moins deux éléments de connexion (12, 14, 16), **caractérisé en ce qu'**au moins l'un des au moins deux éléments de connexion (12, 14, 16) présente au moins une première paroi latérale pouvant être déviée élastiquement (62, 64) qui est prévue pour l'accouplement à l'unité d'accouplement (18).

2. Système d'adaptateur de balai d'essuie-glace selon la revendication 1, **caractérisé en ce que** l'unité d'accouplement (18) présente au moins un premier guide à coulisse (32) qui est prévu pour assurer un guidage de l'un des au moins deux éléments de connexion (12, 14, 16).

3. Système d'adaptateur selon la revendication 2, **caractérisé en ce qu'**au moins le premier guide à coulisse (32) présente une courbure.

4. Système d'adaptateur de balai d'essuie-glace selon l'une quelconque des revendications précédentes, **caractérisé en ce que** l'unité d'accouplement (18) comprend au moins un premier élément d'accouplement (22) qui, dans un état monté, s'applique par engagement par correspondance de formes contre l'un des au moins deux éléments de connexion (12, 14, 16) et qui est prévu pour éviter un desserrement de l'élément de connexion (12, 14, 16) de l'unité d'adaptateur de balai d'essuie-glace (10).

5. Système d'adaptateur de balai d'essuie-glace selon la revendication 4, **caractérisé en ce qu'**au moins le premier élément d'accouplement (22) présente une surface de palier courbe (74) qui est prévue pour supporter de manière pivotante au moins l'un des éléments de connexion (12, 14, 16) dans un état monté.

6. Système d'adaptateur de balai d'essuie-glace selon l'une quelconque des revendications précédentes, **caractérisé par** au moins trois éléments de connexion formés différemment (12, 14, 16) qui sont prévus pour un accouplement à différents types d'adaptateurs de bras d'essuie-glace (200, 202, 204, 206, 208, 210, 212).

7. Système d'adaptateur de balai d'essuie-glace selon l'une quelconque des revendications précédentes, **caractérisé en ce qu'**au moins la première paroi latérale (62, 64) comprend un évidement transversal (36, 76, 90) dans lequel s'engage au moins en partie l'unité d'accouplement (18) dans un état monté.

8. Système d'adaptateur de balai d'essuie-glace selon au moins la revendication 2, **caractérisé en ce qu'**au moins un élément de connexion (12, 14 16) des au moins deux éléments de connexion (12, 14 16) présente au moins un premier élément de guidage (92, 94) qui est prévu pour être guidé dans au moins le premier guide à coulisse (32, 96).

9. Système d'adaptateur de balai d'essuie-glace selon la revendication 8, **caractérisé en ce qu'**au moins le premier élément de guidage (92, 94) est réalisé en forme de demi-sphère.

10. Système d'adaptateur de balai d'essuie-glace selon l'une quelconque des revendications précédentes, **caractérisé en ce que** les au moins deux éléments de connexion formés différemment (12, 14, 16) sont à chaque fois prévus pour un accouplement avec différents types d'adaptateurs de bras d'essuie-glace (200, 202, 204, 206, 208, 210, 212).

11. Système d'adaptateur de balai d'essuie-glace selon l'une quelconque des revendications précédentes, **caractérisé en ce que** l'unité d'accouplement (18) est prévue pour être accouplée de manière amovible à l'un des au moins deux éléments de connexion (12, 14, 16).

12. Système d'adaptateur de balai d'essuie-glace selon au moins la revendication 4, **caractérisé en ce qu'**au moins le premier élément d'accouplement (22) est formé par un élément de fixation (84) de forme au moins essentiellement cylindrique.

13. Système d'adaptateur de balai d'essuie-glace selon la revendication 12, **caractérisé en ce que** l'élément de fixation (84) comprend un évidement longitudinal (86).

14. Système d'adaptateur de balai d'essuie-glace selon au moins la revendication 4, **caractérisé en ce qu'**au moins le premier élément d'accouplement (22) est formé par un élément de douille (88).

15. Système d'adaptateur de balai d'essuie-glace selon au moins la revendication 2, **caractérisé en ce que** l'unité de transmission (20) présente au moins une surface de rampe (24, 26), qui forme un angle aigu (30) avec une surface de base du guide à coulisse (28), et qui est prévue, lors d'une opération de démontage, pour dévier au moins la première paroi latérale (62, 64).

16. Système d'adaptateur de balai d'essuie-glace selon au moins les revendications 10 et 17, **caractérisé en ce que** la surface de rampe (24), lors d'une opération de démontage, s'applique au moins contre le premier élément de guidage (92, 94) et exerce une force de déviation sur au moins la première paroi latérale (62, 64).

17. Système d'adaptateur de balai d'essuie-glace selon l'une quelconque des revendications précédentes, **caractérisé en ce que** l'unité d'adaptateur de balai d'essuie-glace (10) présente au moins deux nervures longitudinales (46, 48) qui s'étendent parallèlement l'une à l'autre et qui sont disposées au niveau d'un corps de base (50) de l'unité d'adaptateur de balai d'essuie-glace (10).

18. Système d'adaptateur de balai d'essuie-glace selon l'une quelconque des revendications précédentes, **caractérisé en ce que** l'unité d'adaptateur de balai d'essuie-glace (10) présente une surface de butée oblique (56) qui est prévue pour limiter une déviation d'un élément de connexion (12, 14, 16) des au moins deux éléments de connexion (12, 14, 16) par rapport à un corps de base (50) de l'unité d'adaptateur de balai d'essuie-glace (10).

19. Balai d'essuie-glace (58) comprenant un système d'adaptateur de balai d'essuie-glace selon l'une quelconque des revendications précédentes.

20. Procédé de démontage d'un système d'adaptateur de balai d'essuie-glace selon l'une quelconque des revendications 1 à 18, dans lequel un élément de connexion (12, 14, 16) est desserré par une unité d'adaptateur de balai d'essuie-glace (10) par le fait que l'élément de connexion (12, 14, 16) est soulevé d'un côté.
